# EUROPEAN PATENT APPLICATION

(11) **EP 3 166 079 A1**
(43) Date of publication of application: **10.05.2017**
(21) Application number: 14896364.8
(22) Date of filing: 02.09.2014
(51) Int. Cl.: G06T 17/00

(54) **AUGMENTED REALITY METHOD AND SYSTEM BASED ON WEARABLE DEVICE**

(30) Priority: 02.07.2014 CN 201410315615
(71) Applicant: Huizhou TCL Mobile Communication Co., Ltd., Huizhou, Guangdong 516006 (CN)
(72) Inventor: YANG, Yan, Huizhou Guangdong 516006 (CN)
(74) Representative: Brachmann, Roland W.
(86) International application number: PCT/CN2014/085752
(87) International publication number: WO 2016/000309

(57) **Abstract**

Provided are an augmented reality method and system based on a wearable device. The augmented reality method comprises: obtaining, by photographing of the wearable device, images from multiple angles of an object to be virtualized; according to the images obtained from multiple angles, building a three-dimensional virtual model of the object to be virtualized, the three-dimensional virtual model having an original outline size; correcting the original outline size of the three-dimensional virtual model to obtain a target outline size thereof; and inserting the three-dimensional virtual model having the target outline size into a selected real scene to obtain a virtual-real fusion image. The present invention enables users to freely and easily modify the size of a three-dimensional virtual model according to user preference, advantageously inserting the three-dimensional virtual model into the real scene, and improving an augmented reality effect at a low cost.

## Description

### [Field of the Invention]

The present invention relates to the field of 3D augmented reality technologies, and in particular relates to a wearable device-based augmented reality method and system.

### [Description of the Related Art]

Augmented Reality (AR or mixed reality) is a new technology developed on the basis of virtual reality, which applies virtual information into the real world through computer technologies, thereby overlaying a real scenario and an object to be virtualized in real time to a picture or space of the same image. As a result, it not only can display information of the real world, but also can display virtual information at the same time. The two types of information complement each other and are overlaid.

Currently, a shooting device typically marks an object to be virtualized (taken), obtains the virtual information of the object, and consequently obtains a corresponding 3D virtual model, then overlays with the computer graphs of the real scenario to achieve Augmented Reality. However, the operations to mark the object to be virtualized are not convenient and are expensive, leading to a relatively high cost of Augmented Reality. Moreover, it is not easy to change the size of the 3D virtual model of an object to be virtualized in overlaying operations, and it is impossible to achieve good overlaying according to the size of the real scenario, leading to a poor effect of Augmented Reality.

### [Summary of the Invention]

In light of this, the technical problem to be solved by examples of the present invention is to provide a wearable device-based augmented reality method and system, which can better overlay a virtual object according to the size of the real scenario, improve the effect of Augmented Reality, and have a relatively low cost.

To solve the above technical problem, another technical solution employed by the present invention is as follows: providing a wearable device-based augmented reality method, comprising: taking pictures of an object to be virtualized via a wearable device from a plurality of angles; according to the pictures from a plurality of angles, constructing a 3D virtual model of the object to be virtualized, and the 3D virtual model having an initial profile dimension; modifying the initial profile dimension of the 3D virtual model so as to obtain a target profile dimension of the 3D virtual model; overlaying the 3D virtual model having the target profile dimension to a selected real scenario so as to obtain a virtual and real integrated image, wherein a plurality of real scenarios to be selected are displayed in the thumbnail format for selection; providing a preview option and a saving option; when the preview option is selected, displaying the current virtual and real integrated image in real time; when the saving option is selected, saving the current virtual and real integrated image.

Wherein, the step of modifying the initial profile dimension of the 3D virtual model comprises: selecting a similar point of the pictures from a plurality of angles, and obtaining the real dimension of the object to be virtualized by simultaneously considering the depth parameters of the pictures from a plurality of angles; modifying the initial profile dimension of the 3D virtual model according to the real dimension.

Wherein, the step of modifying the initial profile dimension of the 3D virtual model comprises: selecting, through a preset database, a corresponding 3D virtual model of the object to be virtualized in the database; modifying the initial profile dimension of the constructed 3D virtual model according to the dimension of the selected 3D virtual model in the database.

To solve the above technical problem, another technical solution employed by the present invention is as follows: providing a wearable device-based augmented reality method, comprising: taking pictures of an object to be virtualized via a wearable device from a plurality of angles; according to the pictures from a plurality of angles, constructing a 3D virtual model of the object to be virtualized, and the 3D virtual model having an initial profile dimension; modifying the initial profile dimension of the 3D virtual model so as to obtain a target profile dimension of the 3D virtual model; overlaying the 3D virtual model having the target profile dimension to a selected real scenario so as to obtain a virtual and real integrated image.

Wherein, the step of modifying the initial profile dimension of the 3D virtual model comprises: selecting a similar point of the pictures from a plurality of angles, and obtaining the real dimension of the object to be virtualized by simultaneously considering the depth parameters of the pictures from a plurality of angles; modifying the initial profile dimension of the 3D virtual model according to the real dimension.

Wherein, the step of modifying the initial profile dimension of the 3D virtual model comprises: selecting, through a preset database, a corresponding 3D virtual model of the object to be virtualized in the database; modifying the initial profile dimension of the constructed 3D virtual model according to the dimension of the selected 3D virtual model in the database.

Wherein, the augmented reality method further comprises: displaying a plurality of real scenarios to be selected in the thumbnail format.

Wherein, the augmented reality method further comprises: providing a preview option and a saving option; when the preview option is selected, displaying the current virtual and real integrated image in real time; when the saving option is selected, saving the current virtual and real integrated image.

To solve the above technical problem, yet another technical solution employed by the present invention is as follows: providing an augmented reality system, comprising a wearable device and a construction terminal, the wearable device comprising a shooting module and a transmission module, the construction terminal comprising a receiving module, a processing module and a display module, the shooting module being configured to take pictures of an object to be virtualized from a plurality of angles, and the transmission module being configured to transmit the pictures from a plurality of angles to the receiving module; the processing module being configured to construct a 3D virtual model of the object to be virtualized according to the pictures from a plurality of angles received by the receiving module, the 3D virtual model having an initial profile dimension; the processing module being further configured to modify the initial profile dimension of the 3D virtual model so as to obtain a target profile dimension of the 3D virtual model, to overlay the 3D virtual model having the target profile dimension to a selected real scenario so as to obtain a virtual and real integrated image, and further to control the display module to display the virtual and real integrated image.

Wherein, the processing module is configured to select a similar point of the pictures from a plurality of angles, obtain the real dimension of the object to be virtualized by simultaneously considering the depth parameters of the pictures from a plurality of angles, and modify the initial profile dimension of the 3D virtual model according to the real dimension.

Wherein, the processing module is configured to select, through a preset database, a corresponding 3D virtual model of the object to be virtualized in the database, and modify the initial profile dimension of the constructed 3D virtual model according to the dimension of the selected 3D virtual model in the database.

Wherein, the processing module is further configured to control the display module to display a plurality of real scenarios to be selected in the thumbnail format.

Wherein, the processing module is further configured to provide a preview option and a saving option, such that, when the preview option is selected, control the display module to display the current virtual and real integrated image in real time, and when the saving option is selected, save the current virtual and real integrated image.

With the above technical solutions, the advantageous effects of the present invention are as follows: taking pictures of an object to be virtualized via a wearable device from a plurality of angles, based on which a 3D virtual model of the object to be virtualized is constructed, then modifying the initial profile dimension of the 3D virtual model so as to obtain its target profile dimension, and lastly, overlaying the 3D virtual model having the target profile dimension to a selected real scenario. As a result, a user is able to freely and conveniently modify the dimension of a 3D virtual model according to personal preferences, and better overlay it onto a real scenario, which subsequently improves the effect of Augmented Reality and has a relatively low cost. Moreover, the use of a wearable device to take pictures so as to construct a 3D virtual model of an object to be virtualized results in easy operations and facilitates the promotion of the use thereof.

### [Brief Description of the Drawings]

- Fig.1: is a flow chart of a preferred example of the augmented reality method according to the present invention;
- Fig.2: is a block diagram of the principle of a preferred example of the augmented reality system according to the present invention.

### [Detailed Description of the Specific Embodiments]

Technical solutions in the examples of the present invention will be clearly and completely described below with references to the accompanying drawings in the examples of the present invention. Obviously, the examples of the present invention described below are only some, rather than all, of the examples of the present invention. Based on the examples of the present invention, all other examples obtained by those skilled in the art without making inventive effort shall be encompassed by the present invention.

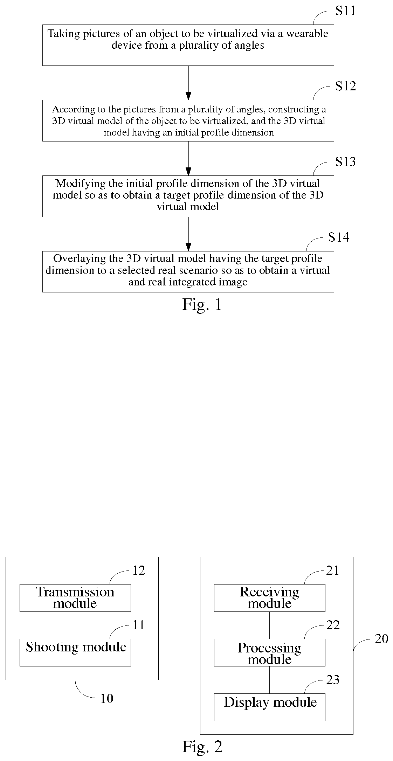

Fig.1 is a flow chart of a preferred example of the augmented reality method according to the present invention. Referring to Fig.1, the augmented reality method of the present example comprises the following steps:
Step S11: taking pictures of an object to be virtualized via a wearable device from a plurality of angles.

Taking pictures of an object to be virtualized via a wearable device from a plurality of angles, and during the shooting process, focusing the lens of the wearable device on the object to be virtualized to obtain pictures from a plurality of angles.

Alternatively, taking a video of an object to be virtualized via a wearable device from a plurality of angles, and during the video-shooting process, focusing the lens of the wearable device on the object to be virtualized, then capturing a screenshot from the obtained video, and thus obtaining pictures from a plurality of angles.

Wherein, the plurality of angles selected for taking the pictures or video should ensure that the obtained images are capable of presenting a 360-degree panoramic view of the object to be virtualized. In addition, the specific shooting movements of the wearable device may be controlled in real time via other terminals (e.g. the construction terminal mentioned herein), e.g., by displaying in real time angles and scenarios that the wearable device can shoot via a tablet, cell phone or laptop, a user carries out control according to the real time angle of the wearable device so as to capture the optimal pictures. Naturally in other examples, a continuous video may be taken via a wearable device, and then other terminals are used to perform capturing and processing on video angles therein to capture the optimal pictures.

The wearable device mentioned through the examples of the present invention uses smart bracelet as an example, which is of course not limited to smart bracelet, but may be any terminal capable of taking pictures or videos, including smart watch, smart glasses and embedded devices in jewelry and clothing accessories, or electronic devices having camera and information transmission functions. Wherein, the connection between the wearable device and other terminals may be wireless, including near field communication, Bluetooth, etc.

Step S12: according to the pictures from a plurality of angles, constructing a 3D virtual model of the object to be virtualized, and the 3D virtual model having an initial profile dimension.

Selecting a similar point of the pictures from a plurality of angles, and constructing a 3D virtual model of the object to be virtualized by simultaneously considering the depth parameters and depth of focus information of the pictures from a plurality of angles, selecting a plurality of points of the object to be virtualized that can reflect its profile features, and employing a digital reconstruction technology.

It should be noted that the dimension of the 3D virtual model obtained through the construction, i.e. the initial profile dimension, corresponds to the dimension of the object to be virtualized on the plurality of pictures.

Step S 13: modifying the initial profile dimension of the 3D virtual model so as to obtain a target profile dimension of the 3D virtual model;

The 3D virtual model having an initial profile dimension may not necessarily the one desired by the user, or the virtual and real integrated image obtained by overlaying it to a selected real scenario may not make the user satisfied. Therefore, it is necessary to modify the initial profile dimension according to (the dimension of) the selected real scenario.

The present example may modify the initial profile dimension of the 3D virtual model using the following two methods, and of course, it is not limited thereby. Those skilled in the art may employ other methods according to actual needs.

One is to select a similar point of the pictures from a plurality of angles, obtain the real dimension of the object to be virtualized by simultaneously considering the depth parameters and depth of focus information of the pictures from a plurality of angles and through computer modulus analysis, and then modify the initial profile dimension according to the real dimension.

The other one is to select, through a preset database, a corresponding 3D virtual model of the object to be virtualized in the database, and a corresponding dimension for every 3D virtual model is pre-stored in the database. Subsequently, modifying the initial profile dimension of the constructed 3D virtual model according to the dimension of the selected 3D virtual model in the database.

Step S14: overlaying the 3D virtual model having the target profile dimension to a selected real scenario so as to obtain a virtual and real integrated image.

In the present example, a plurality of real scenarios to be selected are preferably displayed in the thumbnail format on a display of the terminal for constructing the 3D virtual model.

It should be noted that, after the 3D virtual model having the target profile dimension obtained in Step S 13 to a selected real scenario, the dimension of the 3D virtual model can still be modified. Specifically, the above modification methods may be used for modification until the user is satisfied and confirms the operation.

The terminal configured to construct the 3D virtual model further provides a preview option and a saving option. When a user selects the preview option, the display displays the current virtual and real integrated image in real time; when the user selects the saving option, the terminal saves the current virtual and real integrated image for observation, or for the user to subsequently make further modifications.

Based on the above description, it can be seen that the present example enables a user to freely and conveniently modify the dimension of a 3D virtual model according to personal preferences, and better overlay it onto a real scenario, which subsequently improves the effect of Augmented Reality and has a relatively low cost. Moreover, the use of a wearable device to take pictures so as to construct a 3D virtual model of an object to be virtualized results in easy operations, is fashionable, and facilitates the promotion of the use thereof.

For example, the present invention can be specifically used in modelling, interior design, decoration or shooting of scenarios with 3D simulation effect. It acquires the shape of an object via a portable terminal such as a wearable device with camera functions and a portable communication terminal, which is then input and placed into a corresponding real scenario with an accurate dimension, thereby providing simulated perceptual effects desired by a user as if personally on the scene. During a decoration process, for example, whether the furnishings or decorative effect is desired by a user can be represented by placing simulated furniture (i.e. the 3D virtual model) with a corresponding dimension in a 3D graph of a room (i.e. the real scenario) in advance. Of course, the present invention may also be used to take fun pictures to meet user demand and achieve better simulation effects.

Fig.2 is a block diagram of the principle of a preferred example of the augmented reality system according to the present invention. Referring to Fig.2, the augmented reality system of the present example comprises a wearable device 10 and a construction terminal 20, the wearable device 10 comprising a shooting module 11 and a transmission module 12, the construction terminal 20 comprising a receiving module 21, a processing module 22 and a display module 23. Wherein:
The shooting module 11 is configured to take pictures of an object to be virtualized from a plurality of angles, wherein the plurality of angles selected for taking the pictures or video must ensure that the obtained images are capable of presenting a 360-degree panoramic view of the object to be virtualized.

The transmission module 12 is configured to transmit the pictures taken by the shooting module 11 from a plurality of angles to the receiving module 21 of the construction terminal 20.

The processing module 22 is configured to construct a 3D virtual model of the object to be virtualized according to the pictures from a plurality of angles received by the receiving module 21, wherein the 3D virtual model has an initial profile dimension.

Subsequently, the processing module 22 is configured to modify the initial profile dimension of the 3D virtual model so as to obtain a target profile dimension of the 3D virtual model. Specifically,

The processing module 22 selects a similar point of the pictures from a plurality of angles, obtains the real dimension of the object to be virtualized by simultaneously considering the depth parameters of the pictures from a plurality of angles, and modifies the initial profile dimension of the 3D virtual model according to the real dimension.

Alternatively, the processing module 22 selects, through a preset database, a corresponding 3D virtual model of the object to be virtualized in the database, and modifies the initial profile dimension of the constructed 3D virtual model according to the dimension of the selected 3D virtual model in the database.

Furthermore, the processing module 22 is configured to overlay the 3D virtual model having the target profile dimension to a selected real scenario so as to obtain a virtual and real integrated image, and to control the display module 23 to display the virtual and real integrated image.

In a real application scenario, preferably, the processing module 22 controls the display module 23 to display a plurality of real scenarios to be selected in the thumbnail format, and then overlays the 3D virtual model having the target profile dimension to a selected real scenario based on a selection made by the user.

After the virtual and real integrated image is obtained through overlying, moreover, the processing module 22 is further configured to provide a preview option and a saving option, such that, when a user selects the preview option, the display module 23 is controlled to display the current virtual and real integrated image in real time, and when the user selects the saving option, the current virtual and real integrated image is saved into the memory of the construction terminal 20.

In the augmented reality system described in the present example, the shooting module 11 and the transmission module 12 of the wearable device 10, as well as the receiving module 21, the processing module 22 and the display module 23 of the construction terminal 20, correspondingly carry out the augmented reality method described in the above example. Therefore, the augmented reality system of the present example has the same technical effect.

In addition, it should be understood that the augmented reality method disclosed in the embodiments of the present invention may be implemented in other ways. The embodiments of the wearable device 10 and the construction terminal 20 of the augmented reality system described above are only exemplary. The division of the described modules is just a division according to logic functions, other ways of division may exist during actual implementation. For example, a plurality of modules may be combined or integrated into another system, or some features may be omitted or not executed. Furthermore, the coupling or communication connection among the modules may be via some ports, or may be electrical or other forms.

As components of the augmented reality system, the above functional modules may or may not be physical blocks, they may be disposed at one position or may be distributed over a plurality of network units. They may be implemented either by means of hardware, for example, the display module 23 can be a screen, or by means of software functional blocks. Those skilled in the art may choose some or all of those modules to attain the goal of the solution of the present invention according to actual needs.

In addition, the construction terminal mentioned throughout the examples of the present invention uses computer as an example, which is of course not limited to a computer and may be any terminal with the capability to construct a 3D virtual model, including a laptop, PDA (Personal Digital Assistant), etc., or even a wearable device itself.

In summary, the examples of the present invention take pictures of an object to be virtualized via a wearable device from a plurality of angles, based on which a 3D virtual model of the object to be virtualized is constructed, then modify the initial profile dimension of the 3D virtual model so as to obtain its target profile dimension, and lastly, overlay the 3D virtual model having the target profile dimension to a selected real scenario, such that a user is able to freely and conveniently modify the dimension of the 3D virtual model according to personal preferences, and better overlay it onto a real scenario, which subsequently improves the effect of Augmented Reality and has a relatively low cost. Moreover, the use of a wearable device to take pictures so as to construct a 3D virtual model of an object to be virtualized results in easy operations, is fashionable, and facilitates the promotion of the use thereof.

It should be noted again that only examples of the present invention are described above, and the scope of the present invention is not limited thereby. Any equivalent structure or equivalent flow change based on the Specification and Drawings of the present invention, such as mutual combinations of technical features of all examples, direct or indirect applications in other related technical fields, etc., shall all be encompassed by the present invention.

## Claims

1. A wearable device-based augmented reality method, wherein the method comprises:
- taking pictures of an object to be virtualized via a wearable device from a plurality of angles;
- according to the pictures from a plurality of angles, constructing a 3D virtual model of the object to be virtualized, and the 3D virtual model having an initial profile dimension;
- modifying the initial profile dimension of the 3D virtual model so as to obtain a target profile dimension of the 3D virtual model;
- overlaying the 3D virtual model having the target profile dimension to a selected real scenario so as to obtain a virtual and real integrated image, wherein a plurality of real scenarios to be selected are displayed in the thumbnail format for selection;
- providing a preview option and a saving option;
- when the preview option is selected, displaying the current virtual and real integrated image in real time;
- when the saving option is selected, saving the current virtual and real integrated image.

2. The method according to Claim 1, wherein the step of modifying the initial profile dimension of the 3D virtual model comprises:
- selecting a similar point of the pictures from a plurality of angles, and obtaining the real dimension of the object to be virtualized by simultaneously considering the depth parameters of the pictures from a plurality of angles;
- modifying the initial profile dimension of the 3D virtual model according to the real dimension.

3. The method according to Claim 1, wherein the step of modifying the initial profile dimension of the 3D virtual model comprises:
- selecting, through a preset database, a corresponding 3D virtual model of the object to be virtualized in the database;
- modifying the initial profile dimension of the constructed 3D virtual model according to the dimension of the selected 3D virtual model in the database.

4. A wearable device-based augmented reality method, wherein the method comprises:
- taking pictures of an object to be virtualized via a wearable device from a plurality of angles;
- according to the pictures from a plurality of angles, constructing a 3D virtual model of the object to be virtualized, and the 3D virtual model having an initial profile dimension;
- modifying the initial profile dimension of the 3D virtual model so as to obtain a target profile dimension of the 3D virtual model;
- overlaying the 3D virtual model having the target profile dimension to a selected real scenario so as to obtain a virtual and real integrated image.

5. The method according to Claim 4, wherein the step of modifying the initial profile dimension of the 3D virtual model comprises:
- selecting a similar point of the pictures from a plurality of angles, and obtaining the real dimension of the object to be virtualized by simultaneously considering the depth parameters of the pictures from a plurality of angles;
- modifying the initial profile dimension of the 3D virtual model according to the real dimension.

6. The method according to Claim 4, wherein the step of modifying the initial profile dimension of the 3D virtual model comprises:
- selecting, through a preset database, a corresponding 3D virtual model of the object to be virtualized in the database;
- modifying the initial profile dimension of the constructed 3D virtual model according to the dimension of the selected 3D virtual model in the database.

7. The method according to Claim 4, wherein the method further comprises:
- displaying a plurality of real scenarios to be selected in the thumbnail format.

8. The method according to Claim 4, wherein the method further comprises:
- providing a preview option and a saving option;
- when the preview option is selected, displaying the current virtual and real integrated image in real time;
- when the saving option is selected, saving the current virtual and real integrated image.

9. An augmented reality system, wherein the augmented reality system comprises a wearable device and a construction terminal, the wearable device comprising a shooting module and a transmission module, the construction terminal comprising a receiving module, a processing module and a display module, wherein:
- the shooting module is configured to take pictures of an object to be virtualized from a plurality of angles, and the transmission module is configured to transmit the pictures from a plurality of angles to the receiving module;
- the processing module is configured to construct a 3D virtual model of the object to be virtualized according to the pictures from a plurality of angles received by the receiving module, the 3D virtual model having an initial profile dimension;
- the processing module is further configured to modify the initial profile dimension of the 3D virtual model so as to obtain a target profile dimension of the 3D virtual model, to overlay the 3D virtual model having the target profile dimension to a selected real scenario so as to obtain a virtual and real integrated image, and further to control the display module to display the virtual and real integrated image.

10. The system according to Claim 9, wherein the processing module is configured to select a similar point of the pictures from a plurality of angles, obtain the real dimension of the object to be virtualized by simultaneously considering the depth parameters of the pictures from a plurality of angles, and modify the initial profile dimension of the 3D virtual model according to the real dimension.

11. The system according to Claim 9, wherein the processing module is configured to select, through a preset database, a corresponding 3D virtual model of the object to be virtualized in the database, and modify the initial profile dimension of the constructed 3D virtual model according to the dimension of the selected 3D virtual model in the database.

12. The system according to Claim 9, wherein the processing module is further configured to control the display module to display a plurality of real scenarios to be selected in the thumbnail format.

13. The system according to Claim 9, wherein the processing module is further configured to provide a preview option and a saving option, such that, when the preview option is selected, control the display module to display the current virtual and real integrated image in real time, and when the saving option is selected, save the current virtual and real integrated image.
